Europäisches
Patentamt

European
Patent Office

Office européen
des brevets

(11) **EP 3 396 748 B1**

(12) **EUROPEAN PATENT SPECIFICATION**

(45) Date of publication and mention
of the grant of the patent:
**03.05.2023 Bulletin 2023/18**

(21) Application number: **16878544.2**

(22) Date of filing: **15.12.2016**

(51) International Patent Classification (IPC):
*H01M 4/62* (2006.01)   *C08L 101/00* (2006.01)
*H01M 4/139* (2010.01)   *H01M 10/0566* (2010.01)
*H01M 10/0525* (2010.01)

(52) Cooperative Patent Classification (CPC):
**C08L 101/00; H01M 4/139; H01M 4/62;**
**H01M 4/622; H01M 10/0525; H01M 10/0566;**
Y02E 60/10

(86) International application number:
**PCT/JP2016/087441**

(87) International publication number:
**WO 2017/110654 (29.06.2017 Gazette 2017/26)**

(54) **BINDER COMPOSITION FOR NON-AQUEOUS SECONDARY BATTERY ELECTRODE, SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**

BINDEMITTELZUSAMMENSETZUNG FÜR WASSERFREIE SEKUNDÄRBATTERIEELEKTRODE, AUFSCHLÄMMUNGSZUSAMMENSETZUNG FÜR WASSERFREIE SEKUNDÄRBATTERIEELEKTRODE, WASSERFREIE SEKUNDÄRBATTERIEELEKTRODE UND WASSERFREIE SEKUNDÄRBATTERIE

COMPOSITION DE LIANT POUR ÉLECTRODE DE PILE RECHARGEABLE À ÉLECTROLYTE NON AQUEUX, COMPOSITION DE SUSPENSION ÉPAISSE POUR ÉLECTRODE DE PILE RECHARGEABLE À ÉLECTROLYTE NON AQUEUX, ÉLECTRODE POUR PILE RECHARGEABLE À ÉLECTROLYTE NON AQUEUX, ET PILE RECHARGEABLE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2015 JP 2015252400**

(43) Date of publication of application:
**31.10.2018 Bulletin 2018/44**

(73) Proprietor: **Zeon Corporation**
**Chiyoda-ku**
**Tokyo 100-8246 (JP)**

(72) Inventors:
• **SONOBE, Kenya**
**Tokyo 100-8246 (JP)**

• **WAKIZAKA, Yasuhiro**
**Tokyo 100-8246 (JP)**

(74) Representative: **Maiwald GmbH**
**Elisenhof**
**Elisenstraße 3**
**80335 München (DE)**

(56) References cited:
EP-A1- 3 358 659       WO-A1-2014/196547
WO-A1-2015/064570    WO-A2-2015/187769
JP-A- H08 339 809     JP-A- 2013 008 611
JP-A- 2013 037 883    JP-A- 2015 159 069

EP 3 396 748 B1

**Description**

TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

BACKGROUND

Non-aqueous secondary batteries (hereafter also simply referred to as "secondary batteries") such as lithium ion secondary batteries have characteristics such as compact size, light weight, high energy-density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode for a secondary battery, such as a lithium ion secondary battery, generally includes a current collector and an electrode mixed material layer formed on the current collector. The electrode mixed material layer is formed, for example, by applying, onto the current collector, a slurry composition in which an electrode active material, a binder composition containing a polymer, and so forth are dispersed in a dispersion medium, and drying the applied slurry composition.

In recent years, there have been attempts to improve binder compositions used in the formation of electrode mixed material layers in order to further improve secondary battery performance.

As a polymer used in such a binder composition and slurry composition, a particulate polymer with a small particle diameter may be used in terms of mixing the polymer with the electrode active material used together in the production of the slurry composition so as to uniformly cover the surface of the electrode active material. An electrode produced using the particulate polymer with a small particle diameter can suppress the detachment (dusting) of the electrode active material, the particulate polymer, and the like from the electrode mixed material layer and achieve high close adherence between the components in the electrode mixed material layer and between the electrode mixed material layer and the current collector, through the use of a large specific surface area of the particulate polymer.

For example, in the case of producing the particulate polymer by emulsion polymerization, it is typically known that the particle diameter of the particulate polymer can be decreased by increasing the amount of the surfactant used, and the particle diameter of the particulate polymer can be increased by decreasing the amount of the surfactant used (PTL 1).

For example, JP 2014-26962 A (PTL 1) proposes a binder composition for an electrode containing a particulate polymer with an average particle diameter of 0.15 $\mu$m to 0.40 $\mu$m, by producing a particulate polymer with a particle diameter of 0.15 $\mu$m using 1.5 parts by mass of a surfactant relative to 100 parts by mass of monomers constituting the particulate polymer, and mixing particulate polymers with different particle diameters produced by appropriately changing the blending amount of the surfactant. An electrode produced using the binder composition for an electrode described in PTL 1 has low dusting property, and a secondary battery produced using the electrode has favorable battery performance such as charge capacity and charge/discharge rate characteristics. Documents EP3358659 and WO 2014196547 disclose binder composition comprising particulate polymer manufactured using surfactants.

CITATION LIST

Patent Literature

PTL 1: JP 2014-26962 A

SUMMARY

(Technical Problem)

However, to further improve secondary battery performance, it is necessary to improve the close adherence such as dusting resistance of the produced electrode, and improve the storage characteristics (discharge capacity preservation stability) of the produced secondary battery. Moreover, given that precipitation of metal ions such as lithium onto the electrode during charging of the produced battery causes short-circuiting between the electrodes, there is still room for improvement with regard to suppressing metal precipitation onto the electrode.

It could therefore be helpful to provide an electrode having excellent close adherence between components in an electrode mixed material layer and between the electrode mixed material layer and a current collector.

It could also be helpful to provide a non-aqueous secondary battery that can both suppress metal precipitation onto an electrode during charging and stably preserve discharge capacity.

It could further be helpful to provide a binder composition and a slurry composition from which such an electrode and secondary battery can be produced.

(Solution to Problem)

Through extensive studies, the inventors learned that the close adherence of an electrode, the suppression of metal precipitation onto the electrode, and the storage characteristics can be enhanced by controlling the particle diameter of a particulate polymer and the amount of a surfactant contained in a binder composition produced as in the conventional techniques. In detail, the inventors focused on the following point: after producing a particulate polymer in a predetermined small particle diameter range, reducing a surfactant used in the production of a binder composition containing the particulate polymer to a predetermined small amount range. The inventors thus discovered that an electrode produced using the binder composition containing the particulate polymer and the surfactant has excellent close adherence between the electrode mixed material layer and the current collector, etc. The inventors also discovered that a secondary battery produced using the binder composition containing the particulate polymer and the surfactant produced as mentioned above suppresses metal precipitation onto the electrode during charging and exhibits favorable storage characteristics.

To advantageously solve the problems stated above, a presently disclosed binder composition for a non-aqueous secondary battery electrode comprises: a particulate polymer; and a surfactant, wherein a volume-average particle diameter of the particulate polymer is 0.01 $\mu$m or more and 0.1 $\mu$m or less, a glass-transition temperature of the particulate polymer is - 50°C or more and 15°C or less, and a content of the surfactant is 0.1 parts by mass or more and 1.0 parts by mass or less relative to 100 parts by mass of the particulate polymer. If the binder composition includes the particulate polymer with a predetermined small particle diameter and a predetermined small amount of surfactant in this way, the close adherence of an electrode produced using the binder composition and the suppression of metal precipitation onto the electrode and the improvement in discharge capacity preservation stability in a produced secondary battery can all be achieved.

The "volume-average particle diameter" in the present disclosure denotes a particle diameter (D50) at which, in a particle size distribution (volume basis) measured by laser diffraction, the cumulative volume calculated from a small diameter end of the distribution reaches 50 %.

The "content of the surfactant" in the present disclosure can be calculated by quantitating, by liquid chromatography, the amount of the surfactant removed by purification from the below-mentioned aqueous dispersion containing the particulate polymer and subtracting the quantitative value from the total amount of the surfactant used for reaction.

If the glass-transition temperature of the particulate polymer is in this range, the close adherence of the electrode produced using the binder composition can be further improved.

The "glass-transition temperature" in the present disclosure can be measured by the measurement method described in the EXAMPLES section of the present specification, using a differential scanning calorimeter.

Preferably, in the presently disclosed binder composition for a non-aqueous secondary battery electrode, the particulate polymer contains an ethylenic unsaturated carboxylic acid monomer unit, and a content proportion of the ethylenic unsaturated carboxylic acid monomer unit is 3 mass% or more and 20 mass% or less in the particulate polymer. If the particulate polymer contains the ethylenic unsaturated carboxylic acid monomer unit in this range, the close adherence of the electrode produced using the binder composition including the particulate polymer can be further improved.

The "content proportion of the monomer unit" in the present disclosure can be measured by a nuclear magnetic resonance (NMR) method such as $^1$H-NMR.

To advantageously solve the problems stated above, a presently disclosed slurry composition for a non-aqueous secondary battery electrode comprises: an electrode active material; and the above-described binder composition for a non-aqueous secondary battery electrode. By producing the slurry composition using the above-described binder composition, the close adherence of an electrode produced using the slurry composition and the suppression of metal precipitation onto the electrode and the improvement in storage characteristics in a produced secondary battery can all be achieved.

Preferably, the presently disclosed slurry composition for a non-aqueous secondary battery electrode further comprises a water-soluble polymer. By using the particulate polymer and the water-soluble polymer in combination in the production of the slurry composition, the close adherence of the electrode produced using the slurry composition can be further improved. In addition, metal precipitation onto the electrode in the secondary battery produced using the slurry composition can be further suppressed, and the storage characteristics can be further improved.

The "water-soluble polymer" in the present disclosure denotes such a polymer that, when 0.5 g of the polymer is dissolved in 100 g of water at a temperature of 25 °C, insoluble matter is less than 1.0 mass%.

To advantageously solve the problems stated above, a presently disclosed electrode for a non-aqueous secondary battery is formed using the above-described slurry composition for a non-aqueous secondary battery electrode. The electrode produced using the above-described slurry composition has high close adherence, and also metal precipitation onto the electrode in the secondary battery including the electrode can be suppressed and the storage characteristics can be improved.

To advantageously solve the problems stated above, a presently disclosed non-aqueous secondary battery comprises: a positive electrode; a negative electrode; and an electrolysis solution, wherein at least one of the positive electrode and the negative electrode is the above-described electrode for a non-aqueous secondary battery. By using the presently disclosed electrode for a non-aqueous secondary battery as at least one of the positive electrode and the negative electrode, metal precipitation onto the electrode in the produced secondary battery can be suppressed, and the storage characteristics can be improved.

(Advantageous Effect)

It is therefore possible to provide an electrode for a non-aqueous secondary battery having excellent close adherence between components in an electrode mixed material layer and between the electrode mixed material layer and a current collector, and a binder composition and a slurry composition from which the electrode can be produced.

It is also possible to provide a non-aqueous secondary battery that can both suppress metal precipitation onto an electrode during charging and stably preserve discharge capacity.

DETAILED DESCRIPTION

One of the disclosed embodiments is described in detail below.

A presently disclosed binder composition for a non-aqueous secondary battery electrode can be used in the production of a slurry composition for a non-aqueous secondary battery electrode. The slurry composition for a non-aqueous secondary battery electrode produced using the presently disclosed binder composition for a non-aqueous secondary battery electrode can be used in the formation of an electrode of a non-aqueous secondary battery such as a lithium ion secondary battery. A presently disclosed non-aqueous secondary battery uses the electrode for a non-aqueous secondary battery formed using the presently disclosed slurry composition for a non-aqueous secondary battery electrode.

The presently disclosed binder composition for a non-aqueous secondary battery electrode and slurry composition for a non-aqueous secondary battery electrode are particularly suitable in the production of a negative electrode included in a non-aqueous secondary battery.

(Binder composition for non-aqueous secondary battery electrode)

A presently disclosed binder composition for a non-aqueous secondary battery electrode includes a particulate polymer and a surfactant. The presently disclosed binder composition for a non-aqueous secondary battery electrode may optionally further contain components other than the particulate polymer and the surfactant, which may be included in an electrode of a secondary battery. The other components may include the below-mentioned water-soluble polymer. The presently disclosed binder composition for a non-aqueous secondary battery electrode typically further contains a dispersion medium such as water. In the presently disclosed binder composition for a non-aqueous secondary battery electrode, the volume-average particle diameter of the particulate polymer is 0.01 $\mu$m or more and 0.1 $\mu$m or less, and the content of the surfactant is 0.1 parts by mass or more and 1.0 parts by mass or less relative to 100 parts by mass of the particulate polymer.

The presently disclosed binder composition for a non-aqueous secondary battery electrode includes the particulate polymer with a predetermined small particle diameter, a predetermined glass-transition temperature and a predetermined small amount of surfactant. Due to a large contact surface area of the particulate polymer with a small particle diameter, an electrode produced using the binder composition exhibits excellent close adherence. Moreover, in the case where the presently disclosed binder composition for a non-aqueous secondary battery electrode is used in the production of a slurry composition, due to a small particle diameter of the particulate polymer, excellent uniform dispersibility of the particulate polymer onto the electrode active material surface is achieved without excessive aggregation of the particulate polymer. Aggregates of the particulate polymer and the like cause metal precipitation of lithium or the like on the electrode during charging. Hence, as a result of suppressing particulate polymer aggregation, metal precipitation of lithium or the like on the electrode during charging is suppressed in a secondary battery produced using the binder composition. Furthermore, in a secondary battery produced using the presently disclosed binder composition for a non-aqueous secondary battery electrode, the fine particulate polymer and the small amount of surfactant contribute to favorable adsorption of the particulate polymer to the electrode active material surface. This prevents the formation of degradation deposits of an electrolysis solution on the electrode active material surface, and keeps the discharge capacity of the secondary battery high. The secondary battery thus has excellent storage characteristics.

<Particulate polymer>

«Properties»

[Volume-average particle diameter]

The particulate polymer included in the presently disclosed binder composition for a non-aqueous secondary battery electrode needs to have a volume-average particle diameter of 0.01 $\mu$m or more and 0.1 $\mu$m or less. The volume-average particle diameter of the particulate polymer is preferably 0.02 $\mu$m or more and more preferably 0.03 $\mu$m or more, and preferably 0.08 $\mu$m or less, more preferably 0.06 $\mu$m or less, and further preferably 0.05 $\mu$m or less. If the volume-average particle diameter of the particulate polymer is 0.01 $\mu$m or more, in the production of the binder composition including the particulate polymer, a situation in which a particulate polymer having an excessively small particle diameter aggregates and causes poor dispersibility is prevented, and therefore the resultant binder composition has favorable dispersion stability. The electrode mixed material layer formed using the binder composition in which the particulate polymer disperses favorably without aggregation has a comparatively homogeneous structure, so that the electrolysis solution favorably permeates the electrode mixed material layer in the secondary battery. Hence, metal precipitation onto the electrode can be suppressed, as metal ions such as lithium ions are kept from being unevenly distributed on the electrode surface during charging of the secondary battery. In addition, a situation in which a particulate polymer having an excessively small particle diameter aggregates and adheres to the electrode active material is prevented, and therefore favorable ion conductivity in the battery is maintained. The secondary battery produced using the binder composition including the particulate polymer can thus maintain high discharge capacity.

If the volume-average particle diameter of the particulate polymer is 0.1 $\mu$m or less, in the electrode produced using the particulate polymer, a large contact area between the particulate polymer and the electrode active material and the current collector can be ensured, which contributes to favorable close adherence of the electrode. Moreover, metal precipitation onto an electrode caused by the heterogeneous structure of the electrode produced using a particulate polymer having a large particle diameter and poor discharge capacity preservation stability associated with a particulate polymer having a large particle diameter non-uniformly covering the electrode active material can be prevented.

When a fine particulate polymer with a volume-average particle diameter of 0.1 $\mu$m or less is used as in the presently disclosed binder composition for a non-aqueous secondary battery electrode, in the slurry composition and electrode mixed material layer produced using the particulate polymer, the fine particulate polymer is expected to form a thinner uniform coating on the surface of the electrode active material. The uniform coating of the electrode active material formed by the fine particulate polymer contributes to high electrode close adherence, suppression of metal precipitation onto the electrode, and high storage characteristics while the secondary battery is in normal operation, as mentioned above.

In the case where the secondary battery has a malfunction such as abnormal heating, on the other hand, the fine particulate polymer is expected to cover the whole electrode active material in film form without any gap while melting partially. In the case where, as a result of the whole electrode active material being covered without any gap, the contact point between the electrode active material and the charge transfer ions is lost, ion conductivity in the battery is likely to decrease rapidly, and battery resistance is likely to increase rapidly. The inventors therefore consider that, by using the binder composition including the fine particulate polymer in the production of a secondary battery, the effect of taking an emergency measure such as deactivation upon abnormal operation of the secondary battery can be expected, with it being possible to enhance the safety of the secondary battery.

[Glass-transition temperature]

The glass-transition temperature of the particulate polymer is -50 °C or more, more preferably -40 °C or more, and further preferably -30 °C or more, and 15 °C or less, more preferably -10 °C or less, and further preferably -20 °C or less. If the glass-transition temperature of the particulate polymer is -50 °C or more, excessively high tackiness of the particulate polymer can be suppressed, thus easing the battery production process. If the glass-transition temperature of the particulate polymer is 15 °C or less, in particular -10 °C or less and further -20 °C or less, the particulate polymer has high adhesiveness, so that dusting of the electrode can be prevented and the close adherence of the electrode can be further improved.

[Electrolysis solution gel content proportion]

The electrolysis solution gel content proportion of the particulate polymer is preferably 50 mass% or more, more preferably 55 mass% or more, and further preferably 60 mass% or more, and preferably 99 mass% or less, more preferably 95 mass% or less, and further preferably 90 mass% or less. If the electrolysis solution gel content proportion of the particulate polymer is 50 mass% or more, the strength of the electrode including the particulate polymer can be further enhanced. If the electrolysis solution gel content proportion of the particulate polymer is 99 mass% or less, the close adherence and flexibility of the electrode including the particulate polymer can be further enhanced.

The "electrolysis solution gel content proportion" in the present disclosure can be measured by the method described in the EXAMPLES section.

«Composition»

The composition of the particulate polymer is not limited, as long as the particulate polymer has the above-mentioned volume-average particle diameter. The particulate polymer preferably contains an ethylenic unsaturated carboxylic acid monomer unit, as a polymer constituting the particulate polymer. The particulate polymer may further contain other monomer units in addition to the ethylenic unsaturated carboxylic acid monomer unit.

[Ethylenic unsaturated carboxylic acid monomer unit]

The content proportion of the ethylenic unsaturated carboxylic acid monomer unit in the particulate polymer is preferably 3 mass% or more, and preferably 20 mass% or less, more preferably 15 mass% or less, and further preferably 10 mass% or less. If the particulate polymer contains 3 mass% or more of the ethylenic unsaturated carboxylic acid monomer unit, the chemical and mechanical stability of the obtained polymer particles is increased, and the formation of coarse particles is inhibited. This further increases the adhesion point of the particulate polymer with the electrode active material and the like, and further improves the close adherence of the electrode. If the particulate polymer contains 20 mass% or less of the ethylenic unsaturated carboxylic acid monomer unit, a situation in which a water-soluble component having an aggregation action forms during polymerization and coarse particles are polymerized is prevented. This enhances the adhesiveness of the particulate polymer, and further improves the close adherence such as dusting resistance of the electrode.

Here, the ethylenic unsaturated carboxylic acid monomer unit is a structural unit having a structure formed by polymerizing an ethylenic unsaturated carboxylic acid monomer. Examples of the ethylenic unsaturated carboxylic acid monomer that can form the ethylenic unsaturated carboxylic acid monomer unit include monocarboxylic acids and dicarboxylic acids (anhydrides) such as acrylic acid, methacrylic acid, crotonic acid, maleic acid, fumaric acid, and itaconic acid. Of these, itaconic acid is preferable. One of these ethylenic unsaturated carboxylic acid monomers may be used individually, or two or more of these ethylenic unsaturated carboxylic acid monomers may be used in combination in a freely selected ratio.

[Other monomer units]

The other monomer units that may be contained in the particulate polymer besides the ethylenic unsaturated carboxylic acid monomer unit are not limited, as long as they are monomer units that can be used together with the ethylenic unsaturated carboxylic acid monomer unit and can function as a binder. Examples of the monomers that can form the other monomer units include an aromatic vinyl monomer, an aliphatic conjugated diene monomer, a (meth)acrylic acid ester monomer, a vinyl cyanide-based monomer, an unsaturated carboxylic acid amide monomer, a hydroxyalkyl group-containing unsaturated monomer, and a di(meth)acrylic acid ester monomer.

Examples of the aromatic vinyl monomer include, but are not limited to, styrene, a-methylstyrene, vinyltoluene, and divinyl benzene. Of these, styrene is preferable. One of these aromatic vinyl monomers may be used individually, or two or more of these aromatic vinyl monomers may be used in combination in a freely selected ratio.

Examples of the aliphatic conjugated diene monomer include, but are not limited to, 1,3-butadiene, 2-methyl-1,3-butadiene, 2,3-dimethyl-1,3-butadiene, 2-chloro-1,3-butadiene, substituted linear conjugated pentadienes, and substituted and side-chain conjugated hexadienes. Of these, 1,3-butadiene is preferable. It is more preferable to use 1,3-butadiene in combination with the above-mentioned styrene. One of these aliphatic conjugated diene monomers may be used individually, or two or more of these aliphatic conjugated diene monomers may be used in combination in a freely selected ratio.

Examples of the (meth)acrylic acid ester monomer include, but are not limited to: acrylic acid alkyl esters such as methyl acrylate, ethyl acrylate, n-propyl acrylate, isopropyl acrylate, butyl acrylate such as n-butyl acrylate and t-butyl acrylate, pentyl acrylate, hexyl acrylate, heptyl acrylate, octyl acrylate such as 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate such as n-butyl methacrylate and t-butyl methacrylate, pentyl methacrylate, hexyl methacrylate, heptyl methacrylate, octyl methacrylate such as 2-ethylhexyl methacrylate, nonyl methacrylate, decyl methacrylate, lauryl methacrylate, n-tetradecyl methacrylate, and stearyl methacrylate. Of these, methyl acrylate and methyl methacrylate are preferable, and combined use of methyl acrylate and methyl methacrylate is more preferable. One of these (meth)acrylic acid ester monomers may be used individually, or two or more of these (meth)acrylic acid ester monomers may be used in combination in a freely selected ratio.

Examples of the vinyl cyanide-based monomer include acrylonitrile, methacrylonitrile, α-chloroacrylonitrile, and α-ethylacrylonitrile. One of these vinyl cyanide-based monomers may be used individually, or two or more of these vinyl cyanide-based monomers may be used in combination in a freely selected ratio.

Examples of the unsaturated carboxylic acid amide monomer include acrylamide, methacrylamide, N-methylolacrylamide, N-methylolmethacrylamide, N,N-dimethylacrylamide, and hydroxyethylacrylamide. One of these unsaturated carboxylic acid amide monomers may be used individually, or two or more of these unsaturated carboxylic acid amide monomers may be used in combination in a freely selected ratio.

Examples of the hydroxyalkyl group-containing unsaturated monomer include β-hydroxyethyl acrylate, β-hydroxyethyl methacrylate, hydroxypropyl acrylate, hydroxypropyl methacrylate, hydroxybutyl acrylate, hydroxybutyl methacrylate, 3-chloro-2-hydroxypropyl methacrylate, di(ethylene glycol) maleate, di(ethylene glycol) itaconate, 2-hydroxyethyl maleate, bis(2-hydroxyethyl) maleate, and 2-hydroxyethyl methyl fumarate. One of these hydroxyalkyl group-containing unsaturated monomers may be used individually, or two or more of these hydroxyalkyl group-containing unsaturated monomers may be used in combination in a freely selected ratio.

Examples of the di(meth)acrylic acid ester monomer include ethylene dimethacrylate, diethylene glycol dimethacrylate, ethylene glycol dimethacrylate, diethylene glycol diacrylate, and 1,3-butylene glycol diacrylate. One of these di(meth)acrylic acid ester monomers may be used individually, or two or more of these di(meth)acrylic acid ester monomers may be used in combination in a freely selected ratio.

<Surfactant>

The presently disclosed binder composition for a non-aqueous secondary battery electrode includes a surfactant. In the presently disclosed binder composition for a non-aqueous secondary battery electrode, the content of the surfactant needs to be 0.1 parts by mass or more and 1.0 parts by mass or less relative to 100 parts by mass of the particulate polymer. The content of the surfactant is preferably 0.2 parts by mass or more and more preferably 0.25 parts by mass or more, and preferably 0.8 parts by mass or less and more preferably 0.5 parts by mass or less. If the content of the surfactant in the binder composition is 0.1 parts by mass or more, the particulate polymer is favorably dispersed in the binder composition and the below-mentioned slurry composition without aggregation or precipitation. Therefore, for example in an electrode produced by applying and drying the slurry composition, a state in which the particulate polymer and the electrode active material are favorably dispersed and adhered can be maintained, with it being possible to maintain favorable ion conductivity in the battery. Thus, an increase in internal resistance in the secondary battery can be prevented, and favorable storage characteristics can be achieved. If the content of the surfactant in the binder composition is 1.0 parts by mass or less, when charging/discharging the secondary battery produced using the binder composition, the surfactant can be kept from electrochemically decomposing and causing degradation in charge/discharge efficiency, and favorable storage characteristics in the secondary battery can be achieved.

Control of the content of the surfactant in the binder composition is not limited. For example, a desired small amount of surfactant may be used in the production of the particulate polymer. Alternatively, after the production of the particulate polymer, a surfactant may be removed by any technique. Alternatively, before polymerization in the production of the particulate polymer, a water-soluble polymer may be used as a protective colloid beforehand, instead of a surfactant. Examples of the technique of removing the surfactant include, but are not limited to: dialysis that purifies the surfactant component using a semipermeable membrane, a tube, and the like allowing only ions to pass through, and a solvent such as deionized water; and salting-out that precipitates the surfactant component using any electrolysis solution. Of these, dialysis is preferable in terms of ease of operation and not affecting the polymer component.

The dialysis time (immersion time) in the case of using dialysis is not limited. For example, the dialysis time (immersion time) is preferably 1 hours or more, more preferably 24 hours or more, further preferably 3 days or more, and particularly preferably 5 days or more, and typically 3 weeks or less. The immersion temperature is preferably less than 30 °C. If the immersion temperature is less than 30 °C, the aggregation of the particulate polymer can be further suppressed.

The reasons why favorable storage characteristics in the secondary battery are achieved in the case where the content of the surfactant in the binder composition is small, i.e. 1.0 parts by mass or less, are not clear, but are presumed to be as follows.

The surfactant contained in the binder composition is also contained in the slurry composition for forming the electrode mixed material layer. For example in the electrode (electrode mixed material layer) produced by applying the slurry composition onto the current collector and drying, the surfactant keeps existing in the slurry composition. For example, in the case where the surfactant is an ionic surfactant, the surfactant is typically known to dissociate in a solution such as water and become an ion. Accordingly, in the case where, when injecting an electrolysis solution into the battery body including the electrode containing the surfactant in the assembly of the battery, the electrode and the electrolysis solution come into contact with each other, especially in the case where the electrolysis solution favorably permeates into the electrode by the below-mentioned aftertreatment and the like in the production of the secondary battery, the surfactant-derived ions contained in the electrode mixed material layer may dissociate into the electrolysis solution, and hamper the conductivity of metal ions such as lithium ions for performing battery reaction. By reducing the content of the surfactant in the binder composition to a predetermined range, the internal resistance of the secondary battery is kept low, as a result of which favorable storage characteristics as discharge capacity preservation stability can be obtained.

«Type of surfactant»

The surfactant is not limited, as long as it is controlled to the above-mentioned content. Any of known surfactants such as an anionic surfactant, a nonionic surfactant, a cationic surfactant, and an ampholytic surfactant may be used. Examples of the anionic surfactant include: higher alcohol sulfuric acid ester salts, e.g. sodium dodecyl sulfate such as sodium lauryl sulfate, ammonium dodecyl sulfate such as ammonium lauryl sulfate, sodium octyl sulfate, sodium decyl sulfate, sodium tetradecyl sulfate, sodium hexadecyl sulfate, and sodium octadecyl sulfate; alkyl benzene sulfonic acid salts, e.g. sodium dodecyl diphenil ether (di)sulfonate, sodium succinic acid dialkylester sulfonate, sodium dodecyl benzene sulfonate such as sodium lauryl benzene sulfonate, and sodium hexadecyl benzene sulfonate; and aliphatic sulfonic acid salts, e.g. sodium dodecyl sulfonate such as sodium lauryl sulfonate, and sodium tetradecyl sulfonate. A reactive surfactant having an unsaturated bond may also be used. Of these, sodium dodecyl benzene sulfonate is preferable. One of these surfactants may be used individually, or two or more of these surfactants may be used in combination in a freely selected ratio.

«Method of producing particulate polymer»

The method of producing the particulate polymer is not limited. For example, any of solution polymerization, suspension polymerization, bulk polymerization, and emulsion polymerization may be used. The polymerization reaction may be, for example, addition polymerization such as ionic polymerization, radical polymerization, or living radical polymerization. In the polymerization, the above-mentioned surfactant is used, and additives (such as a molecular weight modifier and a polymerization initiator) other than the surfactant may be further used as necessary. A commonly used molecular weight modifier, polymerization initiator, etc. may be used in the polymerization in an amount that is also the same as commonly used, except the surfactant.

By adjusting the amount of the surfactant used in the production of the particulate polymer, the volume-average particle diameter of the particulate polymer can be controlled to the desired range.

[Molecular weight modifier]

Examples of the molecular weight modifier include, but are not limited to: alkyl mercaptans such as n-hexyl mercaptan, n-octyl mercaptan, t-octyl mercaptan, n-dodecyl mercaptan, t-dodecyl mercaptan, and n-stearyl mercaptan; xanthogen compounds such as dimethyl xanthogen disulfide and diisopropyl xanthogen disulfide; terpinolene; thiuram compounds such as tetramethyl thiuram disulfide, tetraethyl thiuram disulfide, and tetramethyl thiuram monosulfide; phenol compounds such as 2,6-di-t-butyl-4-methylphenol and styrenated phenol; allyl compounds such as allyl alcohol; halogenated hydrocarbon compounds such as dichloromethane, dibromomethane, and carbon tetrabromide; and thioglycolic acid, thiomalic acid, 2-ethylhexyl thioglycolate, dipehnylethylene, and $\alpha$-methylstyrene dimers. Of these, alkyl mercaptans are preferable, and t-dodecyl mercaptan is more preferable, in terms of suppression of a side reaction. One of these molecular weight modifiers may be used individually, or two or more of these molecular weight modifiers may be used in combination.

[Polymerization initiator]

The polymerization initiator may be a known polymerization initiator. Examples include sodium persulfate, ammonium persulfate, and potassium persulfate. Of these, potassium persulfate is preferable. One of these polymerization initiators may be used individually, or two or more of these polymerization initiators may be used in combination in a freely selected ratio.

<Other components>

The presently disclosed binder composition for a non-aqueous secondary battery electrode may contain other components such as a reinforcing material, a leveling agent, a viscosity modifier, and an additive for electrolysis solution, in addition to the components described above. The other components may be any commonly known materials that do not affect the battery reaction. For example, components described in WO 2012/115096 A1 may be used. One of these components may be used individually, or two or more of these components may be used in combination in a freely selected ratio.

<Method of producing binder composition>

The presently disclosed binder composition for a non-aqueous secondary battery electrode may be produced, for example, by mixing a dispersion liquid containing the particulate polymer produced using the surfactant with other components optionally added, without being limited thereto. In the case of producing the binder composition using a dispersion liquid of the particulate polymer, liquid content in the dispersion liquid of the particulate polymer may be directly used as a dispersion medium of the binder composition.

(Slurry composition for non-aqueous secondary battery electrode)

A presently disclosed slurry composition for a non-aqueous secondary battery electrode includes an electrode active material and the binder composition described above, and optionally further includes a water-soluble polymer and other components. In detail, the presently disclosed slurry composition for a non-aqueous secondary battery electrode typically contains an electrode active material, the above-described particulate polymer, and a surfactant, and optionally further contains other components, a dispersion medium, and the like. Since the presently disclosed slurry composition for a non-aqueous secondary battery electrode includes the above-described binder composition, its dispersibility is high. Moreover, when used in the formation of an electrode mixed material layer of an electrode, binding in the electrode active material and between the electrode active material and the current collector can be made with favorable close adherence. Hence, with the use of the presently disclosed slurry composition for a non-aqueous secondary battery electrode, the electrode mixed material layer can be favorably formed to yield the electrode that suppresses dusting. Further, with the use of the electrode formed using the slurry composition including the binder composition, metal precipitation onto the electrode during charging can be suppressed, and excellent storage characteristics of the non-aqueous secondary battery can be achieved.

The following describes an example where the slurry composition for a non-aqueous secondary battery electrode is a slurry composition for a lithium ion secondary battery negative electrode, although the present disclosure is not limited to such.

<Electrode (negative electrode) active material>

The electrode active material is a material that gives and receives electrons in the electrodes of the secondary battery. As the negative electrode active material for a lithium ion secondary battery, a material that can occlude and release lithium is usually used.

Examples of the negative electrode active material for a lithium ion secondary battery include a carbon-based negative electrode active material, a metal-based negative electrode active material, and a negative electrode active material formed by combining these two.

The carbon-based negative electrode active material can be defined as an active material that contains carbon as its main backbone, to which lithium can be inserted (or can be doped). Examples of the carbon-based negative electrode active material include carbonaceous materials and graphite materials.

Examples of the carbonaceous material include graphitizing carbon, and non-graphitizing carbon having a structure close to the amorphous structure typified by glassy carbon.

Examples of the graphitizing carbon include carbon materials made of tar pitch obtained from petroleum or coal. Specific examples include coke, meso-carbon microbeads (MCMB), mesophase pitch-based carbon fiber, and pyrolytic vapor-grown carbon fiber. Examples of the non-graphitizing carbon include a phenol resin fired body, polyacrylonitrile-based carbon fiber, pseudo-isotropic carbon, a furfuryl alcohol resin fired body (PFA), and hard carbon.

Examples of the graphitizing material include natural graphite and artificial graphite.

Examples of the artificial graphite include an artificial graphite obtained by heat-treating a carbon containing graphitizing carbon mostly at 2800 °C or higher, graphitized MCMB obtained by heat-treating MCMB at 2000 °C or higher, and graphitized mesophase pitch-based carbon fiber obtained by heat-treating mesophase pitch-based carbon fiber at 2000 °C or higher.

The metal-based negative electrode active material is an active material containing metal, the structure of which usually contains an element to which lithium can be inserted. When lithium is inserted, the metal-based negative electrode active material exhibits a theoretical electric capacitance of 500 mAh/g or higher per unit mass. Examples of the metal-based active material include a lithium metal; a simple substance of metal that can form a lithium alloy (e.g., Ag, Al, Ba, Bi, Cu, Ga, Ge, In, Ni, P, Pb, Sb, Si, Sn, Sr, Zn, and Ti); alloys of the simple substance of metal; and oxides, sulfides, nitrides, silicides, carbides, and phosphides of the lithium metal, the simple substance of metal, and the alloys of the simple substance of metal. Of these, an active material containing silicon (silicon-based negative electrode active material) is preferable as the metal-based negative electrode active material. With the use of the silicon-based negative electrode active material, the capacity of the lithium ion secondary battery can be increased.

Examples of the silicon-based negative electrode active material include silicon (Si), a silicon-containing alloy, SiO, $SiO_x$, and a composite material of conductive carbon and a Si-containing material obtained by coating or combining a Si-containing material with conductive carbon. The silicon-based negative electrode active material may be one kind of material used individually, or may be two or more kinds of materials used in combination.

Of these, as the negative electrode active material for a lithium ion secondary battery, carbon-based negative electrode active material is preferable, graphitic material is more preferable, and artificial graphite is further preferable.

<Water-soluble polymer>

The slurry composition preferably further includes a water-soluble polymer, in addition to the above-described binder composition and the electrode active material. If the slurry composition further includes the water-soluble polymer, the water-soluble polymer functions as a hydrophilic protective colloid for the particulate polymer, so that the particulate polymer, the electrode active material, and the like can be more favorably dispersed in the production of the slurry composition. In addition, by imparting suitable viscosity to the slurry composition, the effect of achieving more favorable coating characteristics such as coatability can be achieved. Moreover, if the slurry composition further includes the water-soluble polymer, the close adherence of the electrode produced using the slurry composition can be further improved. Here, by appropriately limiting the blending amount of the water-soluble polymer in the slurry composition to, for example, the amount shown in Table 1, the water-soluble polymer can be kept from electrochemically decomposing and causing degradation in charge/discharge efficiency during charging/discharging of the produced secondary battery, and more favorable storage characteristics in the secondary battery can be achieved. The function of the water-soluble polymer as a protective colloid is particularly useful in the case where only a small amount of surfactant is contained as in the presently disclosed binder composition for a non-aqueous secondary battery electrode and slurry composition for a non-aqueous secondary battery electrode.

The reasons why the above-mentioned effect is achieved in the case where the water-soluble polymer is used in the production of the slurry composition are not clear, but are presumed to be as follows.

The additionally used water-soluble polymer functions as a protective colloid for the particulate polymer in the slurry composition, and thus enables more favorable dispersion of the particulate polymer on the electrode active material surface and more homogeneous mixing of the particulate polymer and the electrode active material. Moreover, the effect of the water-soluble polymer on the particulate polymer as a protective colloid helps suppressing the formation of aggregates of the particulate polymer and the like in the slurry composition, so that metal precipitation on the electrode can be suppressed more effectively. Furthermore, the water-soluble polymer promotes the adsorption of the particulate polymer to the electrode active material surface. This further suppresses degradation of the electrolysis solution on the electrode active material surface in the produced secondary battery, and improves the storage characteristics of the secondary battery.

Examples of the water-soluble polymer include, but are not limited to: cellulose compounds such as carboxymethyl cellulose (CMC), carboxyethyl cellulose, ethyl cellulose, hydroxymethyl cellulose, hydroxypropyl cellulose, and carboxyethyl methyl cellulose, and cellulosic polymers including salts such as ammonium salts and alkali metal salts thereof; casein; various kinds of modified starches such as alkyl starch, carboxymethyl starch, starch oxide, and starch phosphate; polyethylene oxide, polyethylene glycol, polyvinyl alcohol, polyvinyl pyrrolidone, polysulfonic acid, and polycarboxylic acid; (meth)acrylic acid copolymers and saponified materials thereof; acrylamide polymers and salts such as ammonium salts and alkali metal salts thereof; and gum arabic, gum tragacanth, xanthan gum, guar gum, alginic acid, and metal salts thereof. One of these water-soluble polymers may be used individually, or two or more of these water-soluble polymers may be used in combination.

Of these, as the water-soluble polymer, cellulosic polymers are preferable, and an alkali metal salt of carboxymethyl cellulose is more preferable. A sodium salt of carboxymethyl cellulose is further preferable, in terms of achieving strong protective colloidal property and excellent dispersion stability.

<Other components>

Other components that may be contained in the slurry composition are not limited, and may be the same as the other components that may be contained in the presently disclosed binder composition. One other component may be used individually, or two or more other components may be used in combination in a freely selected ratio.

<Method of producing slurry composition for negative electrode>

The slurry composition described above can be produced by dispersing or dissolving the above-mentioned components in a dispersion medium such as water. Specifically, the slurry composition can be produced by mixing the above- mentioned components and the dispersion medium using a mixer such as a ball mill, a sand mill, a bead mill, a pigment disperser, a grinding machine, an ultrasonic disperser, a homogenizer, a planetary-type mixer, a planetary mixer, or a FILMIX. Mixing of the above-mentioned components and the dispersion medium may normally be performed for 10 minutes to several hours in a temperature range of room temperature to 80 °C. The dispersion medium used in the production of the slurry composition may be the same as that of the binder composition. The dispersion medium used in the production of the slurry composition may contain the dispersion medium contained in the binder composition.

(Electrode for non-aqueous secondary battery)

A presently disclosed electrode for a non-aqueous secondary battery is formed using the slurry composition for a non-aqueous secondary battery electrode described above. The presently disclosed electrode for a non-aqueous secondary battery typically includes a current collector, and an electrode mixed material layer formed on the current collector. The electrode mixed material layer contains at least an electrode active material, a particulate polymer having a predetermined particle diameter, and a predetermined amount of surfactant, and preferably further contains a water-soluble polymer. Components contained in the electrode mixed material layer are the same as the components contained in the above-described slurry composition for a non-aqueous secondary battery electrode. The suitable ratios of these components in the electrode mixed material layer are the same as the suitable ratios of these components in the slurry composition.

While the particulate polymer exists in particulate form in the binder composition and the slurry composition, the particulate polymer may be in particulate form or in any other form in the electrode mixed material layer formed using the slurry composition.

Since the presently disclosed electrode for a non-aqueous secondary battery is formed using the slurry composition including the presently disclosed binder composition for a non-aqueous secondary battery electrode, favorable close adherence is achieved between the components included in the electrode mixed material layer and between the electrode mixed material layer and the current collector. Moreover, since the presently disclosed electrode for a non-aqueous secondary battery is formed using the slurry composition including the presently disclosed binder composition for a non-aqueous secondary battery electrode, the use of the electrode enables the production of a secondary battery that suppresses metal precipitation onto the electrode during charging and reduces an increase in battery resistance.

The following describes an example where the electrode for a non-aqueous secondary battery is a negative electrode for a lithium ion secondary battery, although the present disclosure is not limited to such.

<Current collector>

The current collector is a material having electrical conductivity and electrochemical durability. Specifically, the current collector may, for example, be made of a metal material such as iron, copper, aluminum, nickel, stainless steel, titanium, tantalum, gold, or platinum. One of these materials may be used individually, or two or more of these materials may be used in combination in a freely selected ratio.

<Method of producing electrode>

The presently disclosed electrode for a non-aqueous secondary battery can be produced, for example, through a step of applying the above-described slurry composition onto the current collector (application step) and a step of drying the slurry composition that has been applied onto the current collector to form an electrode mixed material layer on the current collector (drying step).

[Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. The slurry composition may be applied onto one side or both sides of the current collector. The thickness of the slurry coating on the current collector after application but before drying may be set as appropriate in accordance with the thickness of the electrode mixed material layer to be obtained after drying.

[Drying step]

The slurry composition that has been applied onto the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector as described above, an electrode mixed material layer is formed on the current collector, thereby providing an electrode for a non-aqueous secondary battery that includes the current collector and the electrode mixed material layer.

After the drying step, the electrode mixed material layer may be further subjected to pressing treatment, such as mold pressing or roll pressing. The pressing treatment can improve the close adherence between the electrode mixed material layer and the current collector. Furthermore, when the electrode mixed material layer contains a curable polymer, the polymer is preferably cured after the electrode mixed material layer has been formed.

(Non-aqueous secondary battery)

A presently disclosed non-aqueous secondary battery includes a positive electrode, a negative electrode, and an electrolysis solution, wherein at least one of the positive electrode and the negative electrode is the electrode for a non-aqueous secondary battery described above. Thus, the presently disclosed non-aqueous secondary battery may be configured so that the positive electrode of the secondary battery is the presently disclosed electrode for a non-aqueous secondary battery and the negative electrode is a known negative electrode other than the presently disclosed electrode, that the negative electrode of the secondary battery is the presently disclosed electrode for a non-aqueous secondary battery and the positive electrode is a known positive electrode other than the presently disclosed electrode, or that the positive electrode and the negative electrode of the secondary battery are both the presently disclosed electrode for a non-aqueous secondary battery. It is preferable that the negative electrode of the secondary battery is the presently disclosed electrode for a non-aqueous secondary battery.

The presently disclosed non-aqueous secondary battery may include known battery members such as a separator that separates the positive electrode and the negative electrode from each other to prevent short-circuiting between the positive electrode and the negative electrode, in addition to the positive electrode, the negative electrode, and the electrolysis solution. The battery members such as the positive electrode, the negative electrode, and the separator included in the secondary battery are typically arranged so that the positive electrode is in contact with one side of the separator and the negative electrode is in contact with the other side of the separator. In more detail, the positive electrode mixed material layer side is located on one side of the separator and the negative electrode mixed material layer side is located on the other side of the separator, so as to be in contact with the separator. For example, the secondary battery can be produced by a known assembly method with these battery members being placed in a known battery container, although the present disclosure is not limited to such.

Since the presently disclosed non-aqueous secondary battery includes the electrode produced using the presently disclosed binder composition for a non-aqueous secondary battery, the improvement in the close adherence of the electrode, the suppression of metal precipitation onto the electrode during charging, and the improvement in storage characteristics can all be achieved.

<Positive electrode>

The positive electrode may be any known positive electrode. In detail, the positive electrode may be a positive electrode including a current collector and a positive electrode mixed material layer formed on the current collector, without being limited thereto. The positive electrode mixed material layer typically contains a positive electrode active material, a conductive additive, and a binder.

The current collector, the positive electrode active material, the conductive additive, and the binder in the positive electrode mixed material layer, and the method by which the positive electrode mixed material layer is formed on the current collector may be known, as described, for example, in JP 2013-145763 A.

«Positive electrode active material»

Examples of the positive electrode active material include, but are not limited to, known positive electrode active materials such as lithium-containing cobalt oxide ($LiCoO_2$), lithium manganate ($LiMn_2O_4$), lithium-containing nickel oxide ($LiNiO_2$), lithium-containing composite oxide of Co-Ni-Mn ($Li(Co\ Mn\ Ni)O_2$), lithium-containing composite oxide of Ni-Mn-Al, lithium-containing composite oxide of Ni-Co-Al, olivine-type lithium iron phosphate ($LiFePO_4$), olivine-type manganese lithium phosphate ($LiMnPO_4$), $Li2MnO_3$-$LiNiO_2$-based solid solution, lithium-rich spinel compounds represented by $Li_{1+x}Mn_{2-x}O_4$ ($0 < X < 2$), $Li[Ni_{0.1i7}Li_{0.2}Co_{0.07}Mn_{0.56}]O_2$, and $LiNi_{0.5}Mn_{1.5}O_4$.

The blending amount and the particle diameter of the positive electrode active material are not limited, and may be the same as those of conventionally used positive electrode active materials.

«Conductive additive»

Examples of the conductive additive include: particulate carbon materials such as carbon black and acetylene black; and fibrous carbon materials such as vapor-grown carbon fiber, carbon fiber obtained by carbonizing organic fiber, and carbon nanotubes. Of these, acetylene black is preferable as the conductive additive. One of these conductive additives may be used individually, or two or more of these conductive additives may be used in combination in a freely selected ratio.

The blending amounts of the positive electrode active material and the conductive additive are not limited, and may be the same as those of conventionally used positive electrode active materials and conductive additives.

«Binder»

The binder is not limited, and may be a known binder other than the above-mentioned particulate polymer and water-soluble polymer, such as a fluorine-containing polymer. As the fluorine-containing polymer, polyvinylidene fluoride is preferable. One binder may be used individually, or two or more binders may be used in combination in a freely selected ratio.

The blending amount of the binder is not limited, and may be the same as that of conventionally used binders.

<Electrolysis solution>

The electrolysis solution is normally an organic electrolysis solution in which a supporting electrolyte is dissolved in an organic solvent. For example, in the case where the non-aqueous secondary battery is a lithium ion secondary battery, the supporting electrolyte is a lithium salt. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable and $LiPF_6$ is particularly preferable as these lithium salts readily dissolve in a solvent and exhibit a high degree of dissociation. The electrolyte may be one type used individually, or may be two or more types combined in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolysis solution is not specifically limited so long as the supporting electrolyte can dissolve therein. Examples of organic solvents that can be used include: carbonates such as dimethyl carbonate (DMC), ethylene carbonate (EC), diethyl carbonate (DEC), propylene carbonate (PC), butylene carbonate (BC), and ethyl methyl carbonate (EMC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

Moreover, a known additive such as vinylene carbonate (VC), fluoroethylene carbonate (FEC), or ethyl methyl sulfone may be added to the electrolysis solution.

<Separator>

Examples of the separator include, but are not limited to, a fine porous membrane using polyolefinic (polyethylene, polypropylene, polybutene, or polyvinyl chloride) resin, a fine porous membrane using resin such as polyethylene terephthalate, polycycloolefin, polyether sulfone, polyamide, polyimide, polyimideamide, polyaramide, nylon, and polytetrafluoroethylene, woven fabric or non-woven fabric using polyolefinic fiber, and an aggregate of particles made of an insulating material. Of these, a fine porous membrane using polyolefinic (polyethylene, polypropylene, polybutene, or polyvinyl chloride) resin is preferable because the entire separator can be formed with a thin film-thickness, which increases the ratio of the electrode mixed material layer in the non-aqueous secondary battery, and consequently increases the capacity per unit volume. A fine porous membrane made of polypropylene resin is more preferable.

<Assembly method>

The presently disclosed non-aqueous secondary battery can be produced using a known assembly method, without any specific limitations. In detail, the presently disclosed non-aqueous secondary battery can be produced, for example, by placing the negative electrode obtained as described above, the positive electrode, and the separator in a battery container with these components being rolled or folded as necessary in accordance with the battery shape, filling the battery container with the electrolysis solution, and sealing the battery container. In order to prevent pressure increase inside the non-aqueous secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

<Aftertreatment>

In the production of the secondary battery, for example, the secondary battery assembled as described above may be charged to a predetermined charging depth (initial charging), and the initial-charged non-aqueous secondary battery may be subjected to aftertreatment such as preservation (aging treatment) for a predetermined time in a heated state.

In the case of performing initial charging on the secondary battery, for example, the voltage is preferably 3.30 V or more and 4.00 V or less, in terms of efficiently forming a favorable solid electrolyte film on the electrode mixed material layer.

The heating temperature in the case of subjecting the secondary battery to the aging treatment is, for example, 25 °C or more, and is preferably 40 °C or more and more preferably 55 °C or more. The heating temperature is, for example, 85 °C or less, and is preferably 70 °C or less. The heating retention time of the heated secondary battery is, for example, 1 hour or more, and is preferably 5 hours or more and more preferably 10 hours or more. The heating retention time is, for example, 50 hours or less.

EXAMPLES

The following provides a more specific description of the present disclosure based on examples. However, the present disclosure is not limited to the following examples. In the following description, "%" and "parts" used in expressing quantities are by mass, unless otherwise specified.

The volume-average particle diameter, glass-transition temperature, and electrolysis solution gel content proportion of the particulate polymer, the content of the surfactant in the binder composition, the close adherence of the negative electrode, the state of lithium metal precipitation onto the negative electrode during charging in the secondary battery, and the storage characteristics were measured and evaluated by the following methods.

In the case of a polymer that is produced through copolymerization of a plurality of types of monomers, the proportion of a monomer unit in the polymer that is formed through polymerization of a given monomer is normally, unless otherwise specified, the same as the ratio (charging ratio) of the given monomer among all monomers used in polymerization of the polymer.

<Volume-average particle diameter>

The volume-average particle diameter of the particulate polymer was measured by laser diffraction. In detail, each aqueous dispersion containing a prepared particulate polymer (adjusted to 0.1 mass% in solid content concentration) was used as a sample. The volume-average particle diameter ($\mu$m) was determined to be a particle diameter D50 at which, in a particle size distribution (volume basis) measured by a laser diffraction particle diameter distribution measurement device (produced by Beckman Coulter, Inc., product name: LS-230), the cumulative volume calculated from a small diameter end of the distribution reached 50 %. The results are shown in Table 1.

<Glass-transition temperature>

The glass-transition temperature of the particulate polymer was measured using a differential scanning calorimeter (produced by SII NanoTechnology Inc., product name: DSC6220, reference material: aluminum). In detail, the aqueous dispersion containing the prepared particulate polymer was naturally dried in an environment of a relative humidity of 50 $\pm$ 5 % and a temperature of 23 °C to 26 °C for 3 days, to obtain a film having a thickness of 1 $\pm$ 0.3 mm.

The obtained film was dried using a vacuum dryer at a temperature of 60 °C for 10 hours. After this, using the dried film as a measurement sample, the glass-transition temperature (°C) was measured in accordance with JIS K 7121 at a measurement temperature of -100 °C to 180 °C and a heating rate of 5 °C/min. The results are shown in Table 1.

<Electrolysis solution gel content proportion>

The electrolysis solution gel content proportion of the particulate polymer can be calculated as the mass proportion (mass%) of the solid content insoluble in tetrahydrofuran (THF) in the solid content of the particulate polymer relative to the mass of the whole solid content of the particulate polymer. In detail, the aqueous dispersion containing the prepared particulate polymer was dried in an environment of a relative humidity of 50 $\pm$ 5 % and a temperature of 23 °C to 25 °C, to obtain a film having a thickness of 1 $\pm$ 0.3 mm. The obtained film was then dried using a vacuum dryer at a temperature of 60 °C for 10 hours. The dried film was cut to an approximately square shape of 3 mm or more and 5 mm or less per side, to prepare a dried film piece. The prepared dried film piece was precisely weighed. The mass of the obtained dried film piece was taken to be W0.

The precisely weighed dried film piece was then immersed and dissolved in 50 g of THF in an environment of a temperature of 23 °C to 27 °C for 24 hours. Thereafter, a residual film piece pulled out of the THF was vacuum dried for 3 hours at a temperature of 105 °C. The dried residual film piece was then precisely weighed. The mass of the obtained residual film piece (i.e. content insoluble in THF) was taken to be W1.

The electrolysis solution gel content proportion (mass%) was calculated according to the following formula (I):

$$\text{electrolysis solution gel content proportion} = (W1/W0) \times 100 \ ... \ (I).$$

The results are shown in Table 1.

<Content of surfactant>

The content of the surfactant included in the binder composition was measured in the following manner, using liquid chromatography. In detail, the prepared binder composition was subjected to dialytic purification by the below-mentioned method, and deionized water after dialysis completion used in the dialytic purification was used as a measurement sample. The measurement sample was analyzed under the following conditions, and the amount of surfactant dialytic-removed in the deionized water was quantitated.

By subtracting the quantitated dialytic removal amount of surfactant from the total blending amount of surfactant used in the production of the particulate polymer, the content (parts by mass) of the surfactant included in the binder composition after the dialytic purification was calculated. The results are shown in Table 1.

«Measurement conditions»

Column: produced by Agilent Technologies, product name: ZORBAX XDP-C18 (3.0 mm $\times$ 50 mm, 1.8$\mu$)
Column temperature: 40 °C
Flow rate: 0.75 mL/min
Injection amount: 5 $\mu$L
Detector: DAD $\lambda$ = 210 nm Ref = off
Mobile phase: gradient condition, 30mM-sodium perchlorate (pH = 3.1 phosphoric acid)/acetonitrile

<Close adherence of negative electrode>

The close adherence of the electrode (negative electrode) was evaluated by measuring the dusting property in the following manner. In detail, the post-pressing negative electrode was cut to an approximately square shape of 5 cm $\times$ 5 cm, and the mass (X0) of the cut negative electrode piece was measured. The measured negative electrode piece was then put in a 500 ml glass bottle, and shaken for 30 minutes at a rotational speed of 100 rpm using a shaker. After this, the mass (X1) of the shaken negative electrode piece was measured. The dusting property (mass%) was calculated according to the following formula (II):

$$\text{dusting property} = (X0 - X1)/X0 \times 100 \ ... \ (II).$$

The close adherence of the negative electrode was then evaluated based on the following criteria. A smaller dusting property value (higher dusting resistance) indicates better close adherence with less detachment of the electrode active material and the like from the negative electrode. The results are shown in Table 1.

A: dusting property being less than 2 mass%
B: dusting property being 2 mass% or more and less than 5 mass%
C: dusting property being 5 mass% or more.

<Lithium metal precipitation state>

The state of lithium metal precipitation onto the negative electrode during charging in the secondary battery was visually observed in the following manner. In detail, a produced laminated cell lithium ion secondary battery was left to stand for 5 hours at a temperature of 25 °C after injection of an electrolysis solution. The secondary battery left to stand was initial-charged to a cell voltage of 3.65 V, by a constant-current method at a rate of 0.2 C in an environment of a temperature of 25 °C. The initial-charged secondary battery was then subjected to aging treatment at a temperature of 60 °C for 12 hours. The secondary battery subjected to the aging treatment was discharged to a cell voltage of 3.00 V, by a constant-current method at a rate of 0.2 C in an environment of a temperature of 25 °C. Initial charging/discharging was thus completed.

The secondary battery subjected to the initial charging/discharging was then subjected to constant-current and constant-voltage charging under the conditions of constant current at a rate of 0.2 C and an upper-limit cell voltage of 4.30 V. The secondary battery subjected to the constant-current and constant-voltage charging was further subjected to constant-current discharging under the conditions of constant current at a rate of 0.2 C and a lower-limit cell voltage of 3.00 V.

In addition, the secondary battery subjected to the constant-current discharging was subjected to constant-current charging/discharging 10 times in an environment of a temperature of 25 °C, with a cell voltage of 4.30 V to 3.00 V and at a rate of 0.5 C. After this, the secondary battery was further subjected to constant-current and constant-voltage charging in an environment of a temperature of 25 °C, under the conditions of constant current at a rate of 0.5 C and an upper-limit cell voltage of 4.30 V.

The secondary battery was decomposed in an argon atmosphere which is an inert gas to take the negative electrode out, and the negative electrode taken out was cleaned with diethyl carbonate. The surface of the cleaned negative electrode was visually observed, to evaluate the state of lithium metal precipitated on the negative electrode surface based on the following criteria.

A: no lithium metal precipitation observed on the negative electrode surface
B: the range of lithium metal precipitation observed on the negative electrode surface being less than 50 % of the negative electrode charge area
C: the range of lithium metal precipitation observed on the negative electrode surface being 50 % or more of the negative electrode charge area.

<Storage characteristics>

The storage characteristics in the secondary battery were evaluated as discharge capacity preservation stability in the following manner. In detail, a produced laminated cell lithium ion secondary battery was left to stand for 5 hours in an environment of a temperature of 25 °C after injection of an electrolysis solution. The secondary battery left to stand was initial-charged to a cell voltage of 3.65 V, by a constant-current method at a rate of 0.2 C in an environment of a temperature of 25 °C. The initial-charged secondary battery was then subjected to aging treatment in an environment of a temperature of 60 °C for 12 hours. The secondary battery subjected to the aging treatment was initial-discharged to a cell voltage of 3.00 V, by a constant-current method at a rate of 0.2 C in an environment of a temperature of 25 °C.

The initial-discharged secondary battery was then subjected to constant-current and constant-voltage charging under the conditions of constant current at a rate of 0.2 C and an upper-limit cell voltage of 4.30 V. The secondary battery subjected to the constant-current and constant-voltage charging was further subjected to constant-current discharging under the conditions of constant current at a rate of 0.2 C and a lower-limit cell voltage of 3.00 V.

In addition, the secondary battery subjected to the constant-current discharging was subjected to constant-current charging/discharging in an environment of a temperature of 25 °C, with a cell voltage of 4.30 V to 3.00 V and at a rate of 0.2 C. After this, the secondary battery was equally subjected to constant-current and constant-voltage charging (upper-limit cell voltage: 4.30 V) in an environment of a temperature of 25 °C with constant current at a rate of 0.2 C. Further, the secondary battery subjected to the constant-current and constant-voltage charging was subjected to constant-current discharging (lower-limit cell voltage: 3.00 V) with constant current at a rate of 0.2 C. The discharge capacity (C0) of the secondary battery at this time was measured.

Following this, the secondary battery was subjected to constant-current and constant-voltage charging to a cell voltage of 4.30 V, in an environment of a temperature of 25 °C with constant current at a rate of 0.2 C. The secondary battery subjected to the constant-current and constant-voltage charging was then left to stand for 2 weeks in an environment of a temperature of 55 °C. After this, the secondary battery was subjected to constant-current discharging to a cell voltage of 3.00 V, in an environment of a temperature of 25 °C with constant current at a rate of 0.2 C. The discharge capacity (C1) of the secondary battery at this time was measured.

The discharge capacity difference $\Delta C$ (%) was calculated according to the following formula (III):

$$\text{discharge capacity difference } \Delta C = C1/C0 \times 100 \dots \text{(III)},$$

and evaluated as the storage characteristics indicating discharge capacity preservation stability in the secondary battery based on the following criteria. A larger $\Delta C$ value indicates better storage characteristics. The results are shown in Table 1.

A: discharge capacity difference $\Delta C$ being 90 % or more
B: discharge capacity difference $\Delta C$ being 80 % or more and less than 90 %
C: discharge capacity difference $\Delta C$ being less than 80 %.

(Example 1)

<Production of particulate polymer>

A 5 MPa pressure vessel equipped with a stirrer was charged with 3 parts of itaconic acid as an ethylenic unsaturated carboxylic acid monomer, 37 parts of styrene as an aromatic vinyl monomer and 60 parts of 1,3-butadiene as an aliphatic conjugated diene monomer which are monomers that can form other monomer units, 0.3 parts of t-dodecyl mercaptan as a molecular weight modifier, 4.0 parts of sodium dodecyl benzene sulfonate as a surfactant, 270 parts of deionized water as a solvent, and 1 parts of potassium persulfate as a polymerization initiator. The contents of the pressure vessel were sufficiently stirred, and then heated to and held at 55°C to initiate polymerization reaction.

Cooling was performed in order to terminate the polymerization reaction once the amount of monomer consumption had reached 95.0 %, to obtain an aqueous dispersion containing a polymer. The obtained aqueous dispersion containing the polymer was adjusted to a pH of 8 through addition of a 5 % sodium hydroxide aqueous solution. Thereafter, unreacted monomers were removed from the aqueous dispersion containing the polymer by distillation under heating and reduced pressure. The aqueous dispersion containing the polymer from which the unreacted monomers had been removed was cooled to a temperature of 30 °C or less, to yield an aqueous dispersion of a particulate polymer.

The volume-average particle diameter, the glass-transition temperature, and the electrolysis solution gel content proportion of the particulate polymer contained in the obtained binder composition were measured by the above-mentioned methods. The results are shown in Table 1.

<Production of binder composition>

Following this, the obtained aqueous dispersion of the particulate polymer was put into a cellulosic tube (produced by Wako Pure Chemical Industries, Ltd.), and immersed in deionized water for 1 week, to move the surfactant contained in the aqueous dispersion of the particulate polymer into the deionized water to remove it. By removing the surfactant used in the production of the particulate polymer to a predetermined amount through the dialytic purification of the aqueous dispersion of the particulate polymer in this way, a binder composition for a non-aqueous secondary battery electrode was obtained.

The content of the surfactant contained in the produced binder composition after the dialytic purification was measured by the above-mentioned method. The results are shown in Table 1.

<Production of slurry composition for negative electrode>

A planetary mixer was charged with 97.5 parts of artificial graphite (corresponding to discharge capacity: 360 mAh/g) as a negative electrode active material, 1.5 parts of the binder composition obtained as described above in solid content equivalents of the particulate polymer, and 1.0 parts in solid content equivalents of a 4.5 % aqueous solution of a sodium (Na) salt of carboxymethyl cellulose (produced by Nippon Paper Industries Co., Ltd., product name: MAC350H) as a water-soluble polymer. The mixture was diluted to a solid content concentration of 60 % using deionized water. The diluted mixture was then kneaded for 60 minutes at a rotational speed of 40 rpm using a planetary-type mixer (produced by PRIMIX Corporation, product name: T.K.HIVISMIX 2P-03), in the form of a paste. A further 80 parts of deionized water was added to the obtained paste mixture so as to adjust the viscosity to 1100 $\pm$ 100 mPa·s in measurement by a B-type viscometer (produced by Toki Sangyo Co. Ltd., product name: RB-80L, rotational speed: 12 rpm), thus producing a slurry composition for a negative electrode. The solid content concentration of the obtained slurry composition for a negative electrode was 45 %.

<Production of negative electrode>

The slurry composition for a negative electrode obtained as described above was applied onto one side of a piece of copper foil (thickness: 15 $\mu$m) as a current collector using a comma coater so that the applied amount after drying (negative electrode mixed material layer) was 11.8 mg/cm$^2$ or more and 12.2 mg/cm$^2$ or less. Next, the copper foil with the slurry composition for a negative electrode applied thereon was conveyed within a 80 °C oven for 2 minutes and a 110 °C oven for 2 minutes at a speed of 0.3 m/min, to dry the slurry composition on the copper foil and obtain a pre-pressing negative electrode web.

The obtained pre-pressing negative electrode web was pressed using a roll press so as to have a density of 1.68 g/cm$^3$ or more and 1.72 g/cm$^3$ or less after pressing. Thereafter, the pressed negative electrode web was left for 4 hours under vacuum conditions in an environment of a temperature of 105 °C in order to remove moisture from the negative electrode mixed material layer and further facilitate cross-linking in the negative electrode mixed material layer, thus obtaining a negative electrode.

The close adherence of the obtained negative electrode was measured and evaluated by the above-mentioned method. The results are shown in Table 1.

<Production of slurry composition for positive electrode>

A planetary mixer was charged with 100 parts of LiCoO$_2$ as a positive electrode active material, 2 parts of acetylene black (produced by Denki Kagaku Kogyo Kabushiki Kaisha, product name: HS-100) as a conductive additive, and 2 parts of polyvinylidene fluoride (produced by Kureha Corporation, product name: KF-1100) as a binder. Further, N-methyl-2-pyrrolidone was added to the mixture so that the total solid content concentration of the mixture was 67 %, to produce a slurry composition for a positive electrode.

<Production of positive electrode>

The slurry composition for a positive electrode obtained as described above was applied onto one side of a piece of aluminum foil (thickness: 20 $\mu$m) as a current collector using a comma coater so that the applied amount after drying (positive electrode mixed material layer) was 26.5 mg/cm$^2$ or more and 27.5 mg/cm$^2$ or less. Next, the aluminum foil with the slurry composition for a positive electrode applied thereon was conveyed within a 60 °C oven for 2 minutes and a 120 °C oven for 2 minutes at a speed of 0.5 m/min, to dry the slurry composition on the aluminum foil and obtain a pre-pressing positive electrode web.

The obtained pre-pressing positive electrode web was pressed using a roll press so as to have a density of 3.40 g/cm$^3$ or more and 3.50 g/cm$^3$ or less after pressing. Thereafter, the pressed positive electrode web was left for 3 hours under vacuum conditions in an environment of a temperature of 120 °C in order to remove moisture from the positive electrode mixed material layer, thus obtaining a positive electrode.

<Production of non-aqueous secondary battery>

A single layer separator made of polypropylene (product name: Celgard 2500, cut size: 4.0 cm $\times$ 5.0 cm), the obtained post-pressing positive electrode (cut size: 2.8 cm $\times$ 3.8 cm), and the obtained post-pressing negative electrode (cut size: 3.0 cm $\times$ 4.0 cm) were arranged so that the positive electrode mixed material layer and the negative electrode mixed material layer faced the respective sides of the separator, thus obtaining a single-layer cell. The flat product was packed in an aluminum packing case used as a battery case. The aluminum packing case was filled with a LiPF$_6$ electrolysis solution (mixing solvent: ethylene carbonate (EC)/ethylmethyl carbonate (EMC) = 3/7 (volume ratio), additive: vinylene carbonate (VC) = 2 vol% (solvent ratio)) of 1.0 M in concentration so that no air remained. The aluminum packing case was then closed by heat sealing at a temperature of 150 °C to tightly seal an opening of the aluminum packing case. In this manner, a lithium ion secondary battery as a single-layer laminate cell corresponding to 30 mAh was produced.

For the produced lithium ion secondary battery, the state of lithium metal precipitation onto the negative electrode during charging and the storage characteristics were evaluated by the above-mentioned methods. The results are shown in Table 1.

(Example 2)

A particulate polymer, a binder composition, a slurry composition for a negative electrode, a slurry composition for a positive electrode, a negative electrode, a positive electrode, and a lithium ion secondary battery were produced in the same way as Example 1, except that, in the production of the particulate polymer, the amount of itaconic acid as an ethylenic unsaturated carboxylic acid monomer was changed to 4 parts, the amount of styrene as an aromatic vinyl monomer which is a monomer that can form other monomer units was changed to 48 parts, the amount of 1,3-butadiene as an aliphatic conjugated diene monomer was changed to 48 parts, and the amount of sodium dodecyl benzene sulfonate as a surfactant was changed to 8.0 parts.

The measurement and evaluation were performed in the same way as Example 1. The results are shown in Table 1.

(Example 3)

A particulate polymer, a binder composition, a slurry composition for a negative electrode, a slurry composition for a positive electrode, a negative electrode, a positive electrode, and a lithium ion secondary battery were produced in the same way as Example 1, except that, in the production of the particulate polymer, the amount of itaconic acid as an ethylenic unsaturated carboxylic acid monomer was changed to 5 parts, the amount of styrene as an aromatic vinyl monomer which is a monomer that can form other monomer units was changed to 47 parts, and the amount of 1,3-butadiene as an aliphatic conjugated diene monomer was changed to 48 parts.

The measurement and evaluation were performed in the same way as Example 1. The results are shown in Table 1.

(Example 4)

A particulate polymer, a binder composition, a slurry composition for a negative electrode, a slurry composition for a positive electrode, a negative electrode, a positive electrode, and a lithium ion secondary battery were produced in the same way as Example 1, except that, in the production of the particulate polymer, the amount of itaconic acid as an ethylenic unsaturated carboxylic acid monomer was changed to 5 parts, the amount of styrene as an aromatic vinyl monomer which is a monomer that can form other monomer units was changed to 45 parts, the amount of 1,3-butadiene as an aliphatic conjugated diene monomer was changed to 45 parts, 5 parts of methyl methacrylate as a (meth)acrylic acid ester monomer was added, and the amount of t-dodecyl mercaptan was changed to 0.35 parts.

The measurement and evaluation were performed in the same way as Example 1. The results are shown in Table 1.

(Example 5)

A particulate polymer, a binder composition, a slurry composition for a negative electrode, a slurry composition for a positive electrode, a negative electrode, a positive electrode, and a lithium ion secondary battery were produced in the same way as Example 1, except that, in the production of the particulate polymer, sodium dodecyldiphenylether sulfonate was used as a surfactant instead of sodium dodecyl benzene sulfonate.

The measurement and evaluation were performed in the same way as Example 1. The results are shown in Table 1.

(Comparative Example 1)

A particulate polymer, a binder composition, a slurry composition for a negative electrode, a slurry composition for a positive electrode, a negative electrode, a positive electrode, and a lithium ion secondary battery were produced in the same way as Example 1, except that, in the production of the particulate polymer, the amount of sodium dodecyl benzene sulfonate as a surfactant was changed to 2.0 parts.

The measurement and evaluation were performed in the same way as Example 1. The results are shown in Table 1.

(Comparative Example 2)

A particulate polymer, a binder composition, a slurry composition for a negative electrode, a slurry composition for a positive electrode, a negative electrode, a positive electrode, and a lithium ion secondary battery were produced in the same way as Example 1, except that dialytic purification was not performed in the production of the binder composition, and the obtained aqueous dispersion of the particulate polymer was directly used as the binder composition.

The measurement and evaluation were performed in the same way as Example 1. The results are shown in Table 1.

(Comparative Example 3)

A particulate polymer, a binder composition, a slurry composition for a negative electrode, a slurry composition for a positive electrode, a negative electrode, a positive electrode, and a lithium ion secondary battery were produced in the same way as Example 1, except that, in the production of the particulate polymer, the amount of styrene as an aromatic vinyl monomer which is a monomer that can form other monomer units was changed to 64 parts, the amount of 1,3-butadiene as an aliphatic conjugated diene monomer was changed to 33 parts, the amount of t-dodecyl mercaptan was changed to 0.25 parts, the amount of sodium dodecyl benzene sulfonate as a surfactant was changed to 2.0 parts, and dialytic purification was not performed in the production of the binder composition and the obtained aqueous dispersion of the particulate polymer was directly used as the binder composition

The measurement and evaluation were performed in the same way as Example 1. The results are shown in Table 1.

**Table 1**

| | | | | | | Example 1 | Example 2 | Example 3 | Example 4 | Example 5 | Comparative Example 1 | Comparative Example 2 | Comparative Example 3 |
|---|---|---|---|---|---|---|---|---|---|---|---|---|---|
| Slurry composition | Binder composition | Particulate polymer | Composition | Ethylenic unsaturated carboxylic acid monomer unit | Itaconic acid unit [parts by mass] | 3 | 4 | 5 | 5 | 3 | 3 | 3 | 3 |
| | | | | Aromatic vinyl monomer unit | Styrene unit [parts by mass] | 37 | 48 | 47 | 45 | 37 | 37 | 37 | 64 |
| | | | | Aliphatic conjugated diene monomer unit | 1,3-butadiene unit [parts by mass] | 60 | 48 | 48 | 45 | 60 | 60 | 60 | 33 |
| | | | | (Meth)acrylic acid ester monomer unit | Methyl methacrylate unit [parts by mass] | 0 | 0 | 0 | 5 | 0 | 0 | 0 | 0 |
| | | | Property | Volume-average particle diameter [$\mu$m] | | 0.05 | 0.03 | 0.05 | 0.05 | 0.05 | 0.15 | 0.05 | 0.15 |
| | | | | Glass-transition temperature [°C] | | -30 | -15 | -15 | -5 | -30 | -30 | -30 | 10 |
| | | | | Electrolysis solution gel content proportion [mass%] | | 90 | 80 | 90 | 70 | 90 | 90 | 90 | 90 |
| | | Surfactant | Type | | | DBS-Na | DBS-Na | DBS-Na | DBS-Na | DPES-Na | DBS-Na | DBS-Na | DBS-Na |
| | | | Blending amount [parts by mass vs. 100 parts by mass of particulate polymer] | | | 4.0 | 8.0 | 4.0 | 4.0 | 4.0 | 2.0 | 4.0 | 2.0 |
| | | | Dialytic purification | | | Performed | Performed | Performed | Performed | Performed | Performed | Not performed | Not performed |

(continued)

| | | | | Example 1 | Example 2 | Example 3 | Example 4 | Example 5 | Comparative Example 1 | Comparative Example 2 | Comparative Example 3 |
|---|---|---|---|---|---|---|---|---|---|---|---|
| | | | Content after dialytic purification [parts by mass vs. 100 parts by mass of particulate polymer] | 0.3 | 0.4 | 0.4 | 0.4 | 0.6 | 0.3 | 4.0 | 2.0 |
| | | | Blending amount [parts by mass] | 1.5 | 1.5 | 1.5 | 1.5 | 1.5 | 1.5 | 1.5 | 1.5 |
| | | Water-soluble polymer | Blending amount (Na salt of carboxymethyl cellulose) [parts by mass] | 1.0 | 1.0 | 1.0 | 1.0 | 1.0 | 1.0 | 1.0 | 1.0 |
| | | Electrode active material | Blending amount (artificial graphite) [parts by mass] | 97.5 | 97.5 | 97.5 | 97.5 | 97.5 | 97.5 | 97.5 | 97.5 |
| Evaluation item | | | Close adherence of negative electrode (dusting resistance) | A | B | B | B | A | C | A | C |
| | | | State of lithium metal precipitation onto negative electrode | A | A | A | A | A | C | B | C |
| | | | Storage characteristics in secondary battery | A | A | A | A | B | C | C | C |
| DBS-Na: sodium dodecylbenzenesulfonate<br>DPES-Na: sodium dodecyldiphenylether sulfonate | | | | | | | | | | | |

As can be understood from Table 1, the secondary batteries of Comparative Examples 1 and 3 produced using a particulate polymer with a volume-average particle diameter of more than 0.1 $\mu$m were considerably poor in all of the close adherence of the negative electrode, the state of lithium metal precipitation onto the negative electrode, and the storage characteristics, as compared with the secondary batteries of Examples 1 to 5 produced using a particulate polymer with a volume-average particle diameter of 0.01 $\mu$m or more and 0.1 $\mu$m or less.

Moreover, the secondary batteries of Comparative Examples 2 and 3 having a surfactant content of more than 1.0 parts by mass relative to 100 parts by mass of the particulate polymer were considerably poor in the storage characteristics, as compared with the secondary batteries of Examples 1 to 5 having a small surfactant content of 0.1 parts by mass or more and 1.0 parts by mass or less. Furthermore, the secondary battery of Comparative Example 2 had increased lithium metal precipitation onto the negative electrode, as compared with the secondary batteries of Examples 1 to 5.

INDUSTRIAL APPLICABILITY

It is thus possible to provide an electrode having excellent close adherence between components in an electrode mixed material layer and between the electrode mixed material layer and a current collector, and a binder composition and a slurry composition from which the electrode can be produced.

It is also possible to provide a non-aqueous secondary battery that can both suppress metal precipitation onto an electrode during charging and stably preserve discharge capacity.

**Claims**

1.  A binder composition for a non-aqueous secondary battery electrode, comprising:

    a particulate polymer; and
    a surfactant,
    wherein a volume-average particle diameter, measured by a laser diffraction particle diameter distribution measurement device, of the particulate polymer is 0.01 $\mu$m or more and 0.1 $\mu$m or less,
    a glass-transition temperature, measured by a differential scanning calorimeter, of the particulate polymer is -50 °C or more and 15 °C or less, and
    a content of the surfactant is 0.1 parts by mass or more and 1.0 parts by mass or less relative to 100 parts by mass of the particulate polymer.

2.  The binder composition for a non-aqueous secondary battery electrode according to claim 1,

    wherein the particulate polymer contains an ethylenic unsaturated carboxylic acid monomer unit, and
    a content proportion of the ethylenic unsaturated carboxylic acid monomer unit is 3 mass% or more and 20 mass% or less in the particulate polymer.

3.  A slurry composition for a non-aqueous secondary battery electrode, comprising:

    an electrode active material; and
    the binder composition for a non-aqueous secondary battery electrode according to any one of claims 1 to 2.

4.  The slurry composition for a non-aqueous secondary battery electrode according to claim 3, further comprising a water-soluble polymer.

5.  An electrode for a non-aqueous secondary battery, formed using the slurry composition for a non-aqueous secondary battery electrode according to claim 3 or 4.

6.  A non-aqueous secondary battery, comprising:

    a positive electrode;
    a negative electrode; and
    an electrolysis solution,
    wherein at least one of the positive electrode and the negative electrode is the electrode for a non-aqueous secondary battery according to claim 5.

**Patentansprüche**

1.  Eine Bindemittel-Zusammensetzung für eine Elektrode einer nicht-wässrigen Sekundärbatterie, umfassend:

    ein partikelförmiges Polymer; und
    ein Detergens,
    wobei ein volumengemittelter Partikeldurchmesser des partikelförmigen Polymers, gemessen mit einer Laserdiffraktions-Partikeldurchmesserverteilungs-Messvorrichtung, 0,01 $\mu$m oder mehr und 0,1 $\mu$m oder weniger beträgt,
    eine Glasübergangstemperatur des partikelförmigen Polymers, gemessen mit einem Differentialscan-Kalorimeter, -50 °C oder mehr und 15 °C oder weniger beträgt, und
    ein Gehalt an Detergens 0,1 Gewichtsteile oder mehr und 1,0 Gewichtsteile oder weniger bezogen auf 100 Gewichtsteile des partikelförmigen Polymers beträgt.

2.  Die Bindemittel-Zusammensetzung für eine Elektrode einer nicht-wässrigen Sekundärbatterie gemäß Anspruch 1,

    wobei das partikelförmige Polymer eine ethylenisch ungesättigte Carbonsäure-Monomereinheit umfasst, und
    ein Mengenanteil der ethylenisch ungesättigten Carbonsäure-Monomereinheit am partikelförmigen Polymer 3 Gew.% oder mehr und 20 Gew.-% oder weniger beträgt.

3.  Eine Schlämme-Zusammensetzung für eine Elektrode einer nicht-wässrigen Sekundärbatterie, umfassend:

    ein elektrodenaktives Material; und
    die Bindemittel-Zusammensetzung für eine Elektrode einer nicht-wässrigen Sekundärbatterie gemäß irgendeinem der Ansprüche 1 bis 2.

4.  Die Schlämme-Zusammensetzung für eine Elektrode einer nicht-wässrigen Sekundärbatterie, außerdem umfassend ein wasserlösliches Polymer.

5.  Eine Elektrode für eine nicht-wässrige Sekundärbatterie, hergestellt unter Verwendung der Schlämme-Zusammensetzung für eine Elektrode einer nicht-wässrigen Sekundärbatterie gemäß Anspruch 3 oder 4.

6.  Eine nicht-wässrige Sekundärbatterie, umfassend:

    eine positive Elektrode;
    eine negative Elektrode; und
    eine Elektrolyse-Lösung,
    wobei mindestens eine der positiven Elektrode und der negativen Elektrode die Elektrode für eine nicht-wässrige Sekundärbatterie gemäß Anspruch 5 ist.

**Revendications**

1.  Composition de liant pour une électrode de batterie rechargeable non aqueuse, comprenant :

    un polymère particulaire ; et
    un tensioactif,
    dans laquelle un diamètre de particule moyen en volume, mesuré par un dispositif de mesure de distribution de diamètre de particule par diffraction laser, du polymère particulaire est de 0,01 um ou plus et de 0,1 um ou moins,
    une température de transition vitreuse, mesurée par un calorimètre différentiel à balayage, du polymère particulaire est de -50 °C ou plus et de 15 °C ou moins, et
    une teneur en tensioactif est de 0,1 partie en masse ou plus et de 1,0 partie en masse ou moins par rapport à 100 parties en masse du polymère particulaire.

2.  Composition de liant pour une électrode de batterie rechargeable non aqueuse selon la revendication 1,

    dans laquelle le polymère particulaire contient un motif monomère d'acide carboxylique à insaturation éthylénique, et
une proportion de teneur du motif monomère d'acide carboxylique à insaturation éthylénique est de 3 % en masse ou plus et de 20 % en masse ou moins dans le polymère particulaire.

3. Composition de suspension concentrée pour une électrode de batterie rechargeable non aqueuse, comprenant :

   un matériau actif d'électrode ; et
   la composition de liant pour une électrode de batterie rechargeable non aqueuse selon l'une quelconque des revendications 1 à 2.

4. Composition de suspension concentrée pour une électrode de batterie rechargeable non aqueuse selon la revendication 3, comprenant en outre
   un polymère hydrosoluble.

5. Électrode pour une batterie rechargeable non aqueuse, formée au moyen de la composition de suspension concentrée pour une électrode de batterie rechargeable non aqueuse selon la revendication 3 ou 4.

6. Batterie rechargeable non aqueuse, comprenant :

   une électrode positive ;
   une électrode négative ; et
   une solution d'électrolyse,
   dans laquelle au moins l'une parmi l'électrode positive et l'électrode négative est l'électrode pour une batterie rechargeable non aqueuse selon la revendication 5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014026962 A
- EP 3358659 A
- WO 2014196547 A
- WO 2012115096 A1
- JP 2013145763 A